Europäisches Patentamt

European Patent Office

Office européen des brevets

(19)

(11) Numéro de publication : **0 067 103**
**B1**

(12) # FASCICULE DE BREVET EUROPÉEN

(45) Date de publication du fascicule du brevet :
02.01.86

(21) Numéro de dépôt : **82400950.0**

(22) Date de dépôt : **24.05.82**

(51) Int. Cl.⁴ : **G 21 C 1/02**

(54) Réacteur nucléaire à neutrons rapides.

(30) Priorité : **27.05.81 FR 8110565**

(43) Date de publication de la demande :
**15.12.82 Bulletin 82/50**

(45) Mention de la délivrance du brevet :
**02.01.86 Bulletin 86/01**

(84) Etats contractants désignés :
**BE DE GB IT NL**

(56) Documents cités :
**FR-A- 1 525 183**
**FR-A- 2 101 019**
**FR-A- 2 246 027**
**FR-A- 2 326 011**
**FR-A- 2 337 408**
**FR-A- 2 346 816**
**US-A- 3 525 669**

(73) Titulaire : **COMMISSARIAT A L'ENERGIE ATOMIQUE Etablissement de Caractère Scientifique Technique et Industriel**
**31/33, rue de la Fédération**
**F-75015 Paris (FR)**

(72) Inventeur : **Cabrillat, Marie-Thérèse**
**Les Nids de Provence**
**F-84120 Pertuis (FR)**
Inventeur : **Lions, Noel**
**233 Toutes Aures**
**F-04100 Manosque (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

EP 0 067 103 B1

## Description

La présente invention concerne un réacteur nucléaire à neutrons rapides du type intégré, c'est-à-dire dans lequel l'ensemble du circuit primaire du réacteur est contenu dans une cuve à axe vertical, dite cuve principale, obturée à sa partie supérieure par une dalle. De façon plus précise, l'invention se rapporte à un réacteur dans lequel le métal liquide (généralement du sodium) « chaud » sortant du cœur du réacteur est séparé du métal liquide « froid » sortant des échangeurs par une cuve interne cylindrique.

Dans les réacteurs à neutrons rapides, le métal liquide est réchauffé lors de son passage dans le cœur par suite de la réaction de fission qui se produit à l'intérieur de ce dernier. La chaleur emmagasinée dans le métal liquide contenu dans le circuit primaire est ensuite transférée au métal liquide (généralement du sodium) contenu dans un circuit secondaire par des échangeurs de chaleur intermédiaires. Le métal liquide primaire est alors repris par des pompes primaires pour être réinjecté dans le cœur.

Dans les réacteurs de type intégré, les échangeurs et les pompes sont suspendus à la dalle obturant la cuve principale du réacteur. De plus, dans les réacteurs à cuve interne cylindrique, les échangeurs et les pompes sont situés dans l'espace annulaire défini entre la cuve interne et la cuve principale. Dans la suite du texte, on appellera collecteur « chaud » la zone définie à l'intérieur de la cuve interne et contenant le métal liquide sortant du cœur du réacteur et collecteur « froid » la zone contenant le métal liquide sortant des échangeurs et n'ayant pas encore pénétré dans le cœur du réacteur.

Par rapport aux réacteurs à neutrons rapides dans lesquels le collecteur froid est séparé du collecteur chaud par une cuve interne à redan que traversent les échangeurs et les pompes, les réacteurs à cuve interne cylindrique ont l'avantage de présenter un encombrement réduit au niveau du diamètre du bloc réacteur.

Toutefois, les réacteurs à neutrons rapides comportant une cuve interne cylindrique posent un certain nombre de problèmes au niveau de la liaison entre la cuve interne et les échangeurs. En effet, les conduites et les viroles assurant cette liaison supportent à la fois les charges mécaniques résultant de leur propre poids, les forces de pression hydrostatiques ayant pour origine la liaison étanche qui doit être prévue entre ces structures et la paroi de l'échangeur afin d'isoler efficacement le collecteur chaud du collecteur froid, les contraintes thermiques dues à la différence de températures du métal liquide entre les collecteurs et les contraintes liées au rôle hydraulique joué par ces structures pour l'alimentation des échangeurs. Il est clair que l'accumulation de toutes ces contraintes sur une même structure rend sa réalisation d'autant plus délicate que sa défaillance ne peut évidemment pas être envisagée.

Une illustration d'un réacteur de ce type est donnée par le brevet FR-A-2 337 408. Dans ce document, une structure interne chaude et une structure externe froide sont reliées entre elles en haut des viroles entourant les échangeurs. Des soufflets de dilatation doivent donc être prévus dans la conduite interne chaude. Pour éviter les turbulences créées par ces soufflets, l'intérieur de la conduite interne est doublé par une troisième conduite.

La présente invention a précisément pour objet un réacteur nucléaire à neutrons rapides de type intégré comportant une cuve interne cylindrique dont les structures assurant la liaison entre la cuve interne et les échangeurs ne présentent pas les inconvénients des réacteurs du même type de la technique antérieure. Plus précisément, l'invention a pour objet un réacteur dans lequel les structures comprennent deux parties distinctes assurant respectivement et de façon nettement séparée, d'une part le rôle de baffle hydraulique pour les parties en contact avec le métal liquide chaud et, d'autre part, le rôle d'étanchéité pour les parties froides qui supportent ainsi les charges mécaniques et hydrostatiques.

A cet effet et conformément à la présente invention, il est proposé un réacteur nucléaire à neutrons rapides comprenant une cuve principale à axe vertical obturée à sa partie supérieure par une dalle et contenant le cœur du réacteur et un volume de métal liquide de refroidissement de celui-ci, une cuve interne cylindrique délimitant à l'intérieur de la cuve principale un collecteur chaud surplombant le cœur et un collecteur annulaire froid, au moins un échangeur de chaleur et au moins une pompe primaire suspendus à la dalle et disposés dans le collecteur froid pour assurer respectivement le refroidissement du métal liquide contenu dans le collecteur chaud et sa circulation entre les collecteurs chaud et froid, et des moyens de liaison permettant d'acheminer le métal liquide contenu dans le collecteur chaud jusqu'à une fenêtre d'entrée de l'échangeur, la cuve interne comprenant une virole cylindrique interne et une virole cylindrique externe disposées coaxialement, les moyens de liaison comprenant une structure externe froide supportée par la virole externe et comportant une première virole concentrique à l'échangeur et dont l'extrémité inférieure est raccordée à l'échangeur par une liaison étanche en dessous de la fenêtre d'entrée, et une structure interne chaude supportée par la virole interne et comportant une deuxième virole concentrique à l'échangeur et placée à l'intérieur de la première virole, caractérisé en ce que la première virole est ouverte à son extrémité supérieure au-dessus du niveau libre du métal liquide contenu dans la cuve principale et en ce que la deuxième virole est ouverte à ses deux extrémités situées respectivement au-dessus du niveau libre du métal liquide contenu dans la cuve et en dessous de la fenêtre d'entrée de l'échangeur, de telle sorte que la structure interne chaude et la structure externe froide sont indépendantes l'une de l'autre, la structure interne chaude canalisant le métal liquide contenu dans le collecteur chaud vers la fenêtre d'entrée de l'échangeur et formant baffle thermique, alors que la structure externe froide assure l'étanchéité entre le collecteur chaud et le collecteur froid.

Grâce à ces caractéristiques, on sépare nettement les fonctions entre les structures froides jouant un rôle d'étanchéité et les structures chaudes jouant un rôle de baffle thermohydraulique. Ainsi, les charges mécaniques et hydrostatiques les plus importantes sont supportées par les structures froides, qui ne sont pas soumises au fluage et dont les parties renforcées immergées dans le collecteur froid ne sont pas directement exposées à la fatigue.

Conformément à un mode de réalisation préféré de l'invention, la structure externe froide comprend de plus un conduit externe dont les deux extrémités sont raccordées respectivement à la virole externe de la cuve interne et à ladite première virole, et la structure interne chaude comprend de plus un conduit interne placé à l'intérieur du conduit externe et dont les deux extrémités sont raccordées respectivement à la virole interne de la cuve interne et à ladite deuxième virole.

Selon une autre caractéristique de ce mode de réalisation préféré de l'invention, la liaison étanche entre la première virole et l'échangeur comprend un système à cloche d'argon comportant une partie inférieure et une partie supérieure supportées respectivement par la première virole et par l'échangeur.

Etant donné que l'orifice inférieur de la deuxième virole n'est pas étanche, il risque de se produire une circulation de métal liquide entre les viroles interne et externe constituant la cuve interne lorsque plusieurs échangeurs sont obturés simultanément.

Afin de remédier à cet inconvénient, le réacteur comprend de plus une vanne susceptible de venir obturer la fenêtre d'entrée de l'échangeur, ladite vanne comportant un joint venant engager de façon étanche la partie de la deuxième virole située en dessous de la fenêtre lorsque la vanne est fermée.

On décrira maintenant, à titre d'exemple non limitatif, une variante de réalisation de l'invention en se référant aux dessins annexés dans lesquels :

la figure 1 est une vue schématique, en coupe transversale, d'un réacteur nucléaire à neutrons rapides réalisé conformément aux enseignements de la présente invention,

la figure 2 est en vue à plus grande échelle, en coupe selon la ligne II-II de la figure 1, montrant de façon schématique les structures permettant de relier la cuve interne cylindrique aux fenêtres d'entrée des échangeurs, et

la figure 3 est une vue schématique, en coupe transversale, comparable à la figure 1 montrant à plus grande échelle la cuve interne et les structures reliant cette cuve à l'un des échangeurs conformément à une variante de réalisation de l'invention.

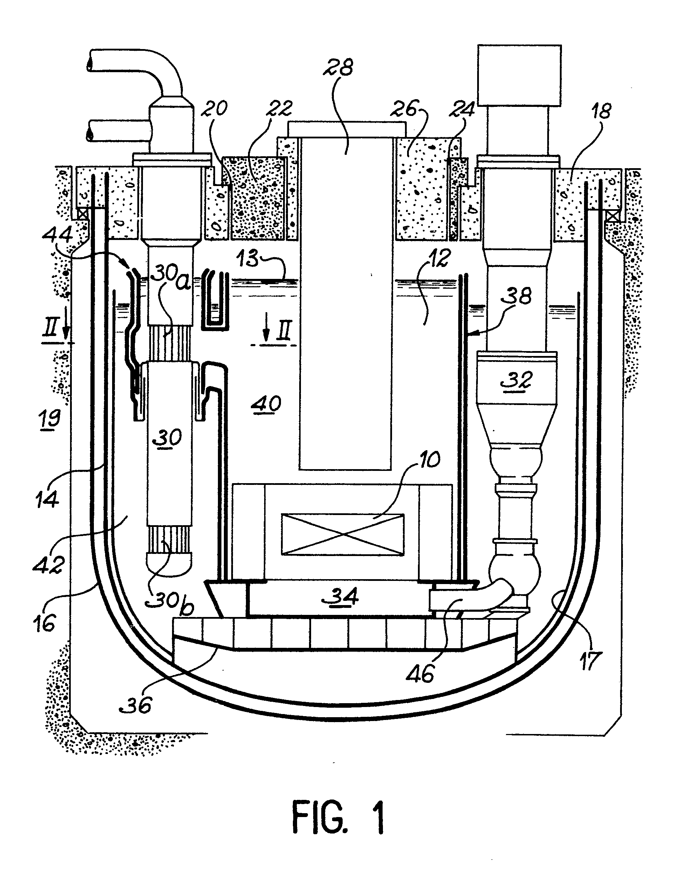

On a représenté schématiquement sur la figure 1 un réacteur nucléaire à neutrons rapides de type intégré. Le cœur 10 du réacteur est immergé dans un volume 12 d'un métal liquide de refroidissement (généralement du sodium) contenu à l'intérieur d'une cuve 14 à axe vertical, dite cuve principale. La cuve principale 14 est doublée à l'extérieur par une seconde cuve 16, dite cuve de sécurité. De plus, dans la variante représentée, elle est doublée à l'intérieur par un baffle thermique 17. Les extrémités supérieures ouvertes des cuves 14 et 16 sont encastrées dans une dalle de fermeture horizontale 18 qui repose par un épaulement périphérique sur un rebord d'appui prévu dans un puits de cuve 19 délimitant l'installation.

De façon connue, la dalle 18 est percée en son centre d'une ouverture 20 dans laquelle est reçu un grand bouchon tournant 22 percé d'une ouverture 24 excentrée par rapport à l'ouverture 20 et recevant un petit bouchon tournant 26 portant le couvercle de cœur 28. La rotation combinée des bouchons tournants 22 et 26 permet, au moyen d'un système de manutention (non représenté), d'effectuer le chargement et le déchargement des assemblages combustibles dans le cœur 10 du réacteur. Le couvercle de cœur 28 porte de façon connue les instruments de mesure et de contrôle du cœur.

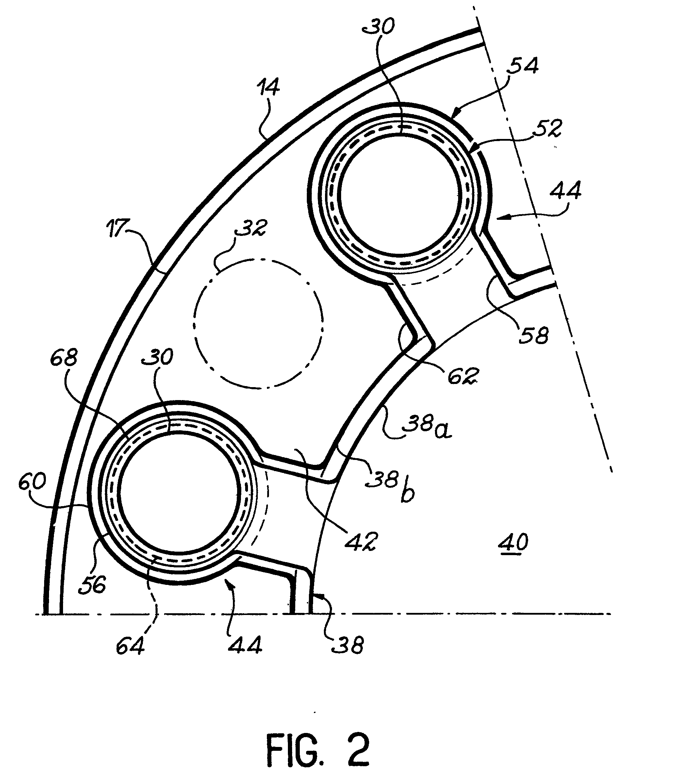

Dans sa zone périphérique entourant les bouchons tournants, la dalle 18 supporte des échangeurs de chaleur intermédiaires 30 et des pompes 32 qui sont régulièrement répartis et disposés alternativement comme l'illustre la figure 2.

Le cœur 10 du réacteur représenté sur la figure 1 est supporté et alimenté en métal liquide par un sommier 34, lui-même monté sur un platelage 36 qui repose sur le fond de la cuve principale 14. Le sommier 34 assure également le supportage d'une cuve interne cylindrique 38 dont l'axe vertical est confondu avec celui des cuves 14 et 16. La cuve interne 38 entoure le cœur 10 du réacteur et s'élève au-dessus du niveau libre 13 du métal liquide 12 pour définir au-dessus du cœur un collecteur chaud 40 et, entre la cuve interne 38 et la cuve principale 14, un collecteur froid 42. Une liaison, désignée de façon générale par la référence 44, est prévue entre la cuve interne 38 et chacun des échangeurs 30 pour amener le métal liquide contenu dans le collecteur chaud 40 jusqu'à une fenêtre d'entrée 30a formée dans ces échangeurs. Chacun des échangeurs comprend en outre une fenêtre de sortie 30b débouchant dans le collecteur froid 42 et le métal liquide rejeté dans ce dernier par les échangeurs est repris par les pompes 32 et réinjecté dans le sommier 34 par des conduites 46.

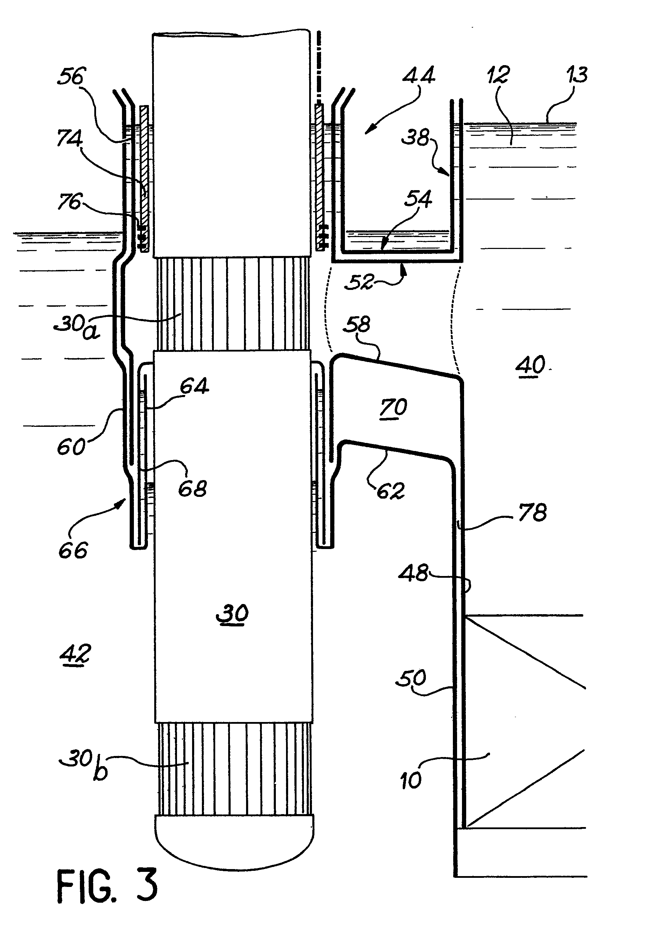

Conformément à l'invention et comme l'illustrent plus particulièrement les figures 2 et 3, la cuve interne 38 comprend deux viroles coaxiales et parfaitement cylindriques définissant une virole interne 48 et une virole externe 50. De plus, chacun des moyens de liaison 44 comprend une structure chaude interne 52 raccordée à la virole interne 48 et une structure froide externe 54 raccordée à la virole externe 50. La structure interne 52 est en contact avec le métal liquide sortant du collecteur chaud 40. Elle comprend une virole 56 concentrique à l'échangeur 30 et ouverte à ses deux extrémités, ainsi qu'une conduite 58 faisant communiquer le collecteur chaud 40 avec l'intérieur de la virole 56. On voit sur la figure 3 que l'extrémité supérieure de la virole 56 est située au-dessus du niveau libre du métal liquide chaud contenu dans cette cuve et que l'extrémité inférieure de la virole 56 se prolonge en dessous de la fenêtre d'entrée 30a de l'échangeur sans être reliée de façon étanche à ce dernier. De plus, la conduite 58 est en forme de bec de cafetière et située au niveau de la fenêtre 30a.

De façon comparable, la structure externe 54 est en contact avec le métal liquide contenu dans le collecteur froid 42. Cette structure 54 comprend également une virole 60 concentrique à l'échangeur 30 et disposée à l'extérieur de la virole 56 et une conduite 62 reliant la virole externe 50 à la virole 60. Comme la virole 56, la virole 60 est ouverte en partie haute et son extrémité supérieure est placée au même niveau, c'est-à-dire au-dessus du niveau libre du métal liquide contenu dans le collecteur chaud 40. L'extrémité inférieure de la virole 60 descend en dessous de l'extrémité inférieure de la virole 56 et supporte la partie inférieure 64 d'un système d'étanchéité à cloche d'argon 66, de type connu en soi. La partie supérieure 68 du système d'étanchéité 66 est fixée sur la paroi externe de l'échangeur 30 en dessous de la fenêtre d'entrée 30a.

Comme la conduite 52, la conduite 54 présente la forme d'un bec de cafetière. De plus, comme le montre la figure 3, la partie inférieure de la conduite 62 est écartée de la partie inférieure de la conduite 58, cette dernière étant pratiquement au niveau du bord inférieur de la fenêtre 30a, alors que la partie inférieure de la conduite 62 se trouve légèrement au-dessus de l'extrémité inférieure de la virole 56. Une chambre 70 se trouve ainsi définie entre les conduites 58 et 62.

L'échangeur 30 est équipé d'une vanne tubulaire 74 disposée normalement au-dessus de la fenêtre d'entrée 30a comme le montre la figure 3 et dont la hauteur est suffisante pour obturer totalement la fenêtre 30a lorsqu'elle est amenée en vis-à-vis de cette dernière. Dans le mode de réalisation représenté sur la figure, la vanne 74 porte sur sa face externe et à son extrémité inférieure des joints à segment 76 prévus pour venir obturer de façon étanche le passage formé entre la partie inférieure de la virole interne 56 et la partie 68 du joint 66. Cette caractéristique permet d'éviter toute circulation de sodium dans la chambre 70 et dans l'espace 78 séparant les viroles 48 et 50 lorsque plusieurs échangeurs 30 sont obturés.

En conclusion, dans la variante de réalisation de l'invention qui vient d'être décrite, la cuve interne cylindrique 38 se caractérise par le fait qu'elle comprend deux viroles concentriques parfaitement cylindriques qui présentent donc une structure particulièrement simple. De plus, les moyens de liaison qui relient la cuve interne à chacun des échangeurs comprennent une structure externe froide 54 supportée par la virole externe 50 et raccordée de façon étanche à l'échangeur par le système 66 et une structure interne chaude jouant le rôle de baffle thermique tout en assurant l'acheminement du métal liquide contenu dans le collecteur chaud vers la fenêtre d'entrée de l'échangeur. En d'autres termes, la structure froide 54 assure l'étanchéité entre le collecteur chaud et le collecteur froid et elle est chargée par les forces de pression hydrostatique et par son propre poids. Pour sa part, la structure chaude 52 joue un rôle thermique et hydraulique pour l'alimentation des échangeurs. De plus, le fait que la partie inférieure de la virole interne 56 n'est pas étanche permet de supprimer les efforts de pression hydrostatique.

Les fonctions d'échanchéité et thermohydraulique sont donc nettement séparées puisque seule la structure froide 54 joue un rôle d'étanchéité, la structure interne 52 jouant pour sa part le rôle de baffle thermohydraulique. Les charges mécaniques et hydrostatiques les plus importantes sont donc supportées par les structures froides qui ne sont pas soumises au fluage et dont les parties immergées dans le collecteur froid 42 ne sont pas directement exposées à la fatigue.

**Revendications**

1. Réacteur nucléaire à neutrons rapides comprenant une cuve principale (14) à axe vertical obturée à sa partie supérieure par une dalle (18) et contenant le cœur (10) du réacteur et un volume (12) de métal liquide de refroidissement de celui-ci, une cuve interne cylindrique (38) délimitant à l'intérieur de la cuve principale un collecteur chaud (40) surplombant le cœur et un collecteur annulaire froid (42), au moins un échangeur de chaleur (30) et au moins une pompe primaire (32) suspendus à la dalle et disposés dans le collecteur froid pour assurer respectivement le refroidissement du métal liquide contenu dans le collecteur chaud et sa circulation entre les collecteurs chaud et froid, et des moyens de liaison (44) permettant d'acheminer le métal liquide contenu dans le collecteur chaud jusqu'à une fenêtre d'entrée (30a) de l'échangeur, la cuve interne (38) comprenant une virole cylindrique interne (48) et une virole cylindrique externe (50) disposées coaxialement, les moyens de liaison (44) comprenant une structure externe froide (54) supportée par la virole externe (50) et comportant une première virole (60) concentrique à l'échangeur et dont l'extrémité inférieure est raccordée à l'échangeur par une liaison étanche (66) en dessous de la fenêtre d'entrée (30a), et une structure interne chaude (52) supportée par la virole interne (48) et comportant une deuxième virole (56) concentrique à l'échangeur et placée à l'intérieur de la première virole, caractérisé en ce que la première virole (60) est ouverte à son extrémité supérieure au-dessus du niveau libre (13) du métal liquide contenu dans la cuve principale et en ce que la deuxième virole (56) est ouverte à ses deux extrémités situées respectivement au-dessus du niveau libre du métal liquide contenu dans la cuve et en dessous de la fenêtre d'entrée de l'échangeur, de telle sorte que la structure interne chaude (52) et la structure externe froide (54) sont indépendantes l'une de l'autre, la structure interne chaude canalisant le métal liquide contenu dans le collecteur chaud vers la fenêtre d'entrée de l'échangeur et formant baffle thermique, alors que la structure externe froide assure l'étanchéité entre le collecteur chaud et le collecteur froid.

2. Réacteur nucléaire selon la revendication 1, caractérisé en ce que la structure externe froide (54) comprend de plus un conduit externe (62) dont les deux extrémités sont raccordées respectivement à la virole externe (50) de la cuve interne et à ladite première virole (60) et en ce que la structure interne chaude (52) comprend de plus un conduit interne (58) placé à l'intérieur du conduit externe et dont les deux extrémités sont raccordées respectivement à la virole interne (48) de la cuve interne et à ladite deuxième virole (56).

3. Réacteur nucléaire selon l'une quelconque des revendications 1 ou 2, caractérisé en ce que ladite liaison étanche (66) comprend un système à cloche d'argon comportant une partie inférieure (64) et une partie supérieure (68) supportées respectivement par la première virole (60) et par l'échangeur (30).

4. Réacteur nucléaire selon l'une quelconque des revendications 1 à 3, caractérisé en ce qu'il comprend de plus une vanne (74) susceptible de venir obturer la fenêtre d'entrée (30a) de l'échangeur, ladite vanne comportant des joints (76) venant engager de façon étanche la partie de la deuxième virole (56) située en dessous de la fenêtre lorsque la vanne est fermée.

**Claims**

1. Fast neutron reactor comprising a main vessel (14) having a vertical axis closed at its upper part by a slab (18) and containing the reactor core (10) and a volume (12) of liquid metal coolant, an inner cylindrical vessel (38) forming within the main vessel a hot collector (40) over the core and an annular cold collector (42), at least one heat exchanger (30) and at least one primary pump (32) suspended from the slab and located in the cold collector to produce respectively cooling of liquid metal in the hot collector and its circulation between the hot and cold collectors, and connection means (44) permitting liquid metal contained in the hot collector to be conducted to an inlet port (30a) of the exchanger, the internal vessel (38) comprising a coaxially disposed cylindrical inner shell (48) and a cylindrical outer shell (50), the connection means (44) comprising an outer cold structure (54) supported by the outer shell (50) and comprising a first shell (60), concentric with the exchanger, whose lower end is connected to the exchanger by a fluid-tight linkage (66) below the inlet port (30a), and an inner hot structure (52) supported by the inner shell (48) and comprising a second shell (56) concentric with the exchanger and located within the first shell, characterized in that the first shell (60) is open at its upper end above the free level (13) of liquid metal contained in the main vessel, and in that the second shell (56) is open at both ends located respectively above the free level of liquid metal contained in the vessel and below the inlet port of the exchanger, whereby the hot inner structure (52) and the cold outer structure (54) are independent from one another, the hot inner structure conducting liquid metal contained in the hot collector towards the inlet port of the exchanger and constituting a thermal baffle, while the cold outer structure produces fluid-tightness between the hot collector and the cold collector.

2. Nuclear reactor according to Claim 1, characterized in that the cold outer structure (54) additionally comprises an external conduit (62) whose two ends are respectively connected to the external shell (50) of the inner vessel and to said first shell (60), and in that the hot inner structure (52) additionally comprises an internal conduit (58) located within the external conduit and whose two ends are respectively connected to the inner shell (48) of the inner vessel and to said second shell (56).

3. Nuclear reactor according to either of Claims 1 and 2, characterized in that said fluid-tight connection (66) comprises an argon chamber having a lower part (64) and an upper part (68) respectively supported by the first shell (60) and by the exchanger (30).

4. Nuclear reactor according to any one of Claims 1 to 3, characterized in that it additionally comprises a valve (74) adapted to close the inlet port (30a) of the exchanger, said valve having gaskets (76) providing fluid-tight engagement of the part of the second shell (56) located below the port when the valve is closed.

**Patentansprüche**

1. Schneller Kernreaktor mit einem Hauptbehälter (14) mit vertikaler Achse, der an seinem oberen Abschnitt mit einer Deckelplatte (18) abgeschlossen ist und den Reaktorkern (10) und ein Flüssigmetallvolumen (12) zu dessen Kühlung enthält, mit einem inneren, zylindrischen Behälter (38), der innerhalb des Hauptbehälters einen heißen Sammler (40) der sich über dem Kern befindet, und einen kalten Ringsammler (42) begrenzt, mit wenigstens einem Wärmetauscher (30) und wenigstens einer Primärpumpe (32), die von der Deckelplatte gehaltert und in dem kalten Kollektor angeordnet sind, um die Kühlung des in dem heißen Kollektor enthaltenen Flüssigmetalls bzw. die Zirkulation zwischen dem heißen und dem kalten Kollektor sicherzustellen, und mit Verbindungsmitteln (44), die erlauben, das in dem heißen Sammler enthaltene Flüssigmetall zu einem Eintrittsfenster (30a) des Wärmetauschers zu führen, wobei der innere Behälter (38) einen inneren, zylindrischen Ring (48) und einen äußeren, zylindrischen Ring (50) aufweist, welche koaxial angeordnet sind, die Verbindungsmittel (44) eine äußere, kalte Struktur (54), die von dem äußeren Ring (50) getragen ist und einen ersten Ring (60) umfaßt, der mit dem Wärmetauscher konzentrisch und dessen unteres Ende mit dem Wärmetauscher über eine dichte Verbindung (66) unterhalb des Eintrittsfensters (30a) verbunden ist, und eine innere, heiße Struktur (52) aufweist, die von dem inneren Ring (48) getragen ist und einen zweiten Ring (56) umfaßt, der konzentrisch zu dem Wärmetauscher und innerhalb des ersten Ringes angeordnet ist, dadurch gekennzeichnet, daß der erste Ring (60) an seinem oberen Ende oberhalb des freien Pegels (13) des Flüssigmetalls offen ist, welches in dem Hauptbehälter enthalten ist, und daß der zweite Ring (56) an seinen zwei Enden offen ist, die sich oberhalb des freien Pegels des in dem Behälter enthaltenen Flüssigmetalls bzw. unterhalb des Eintrittsfensters des Wärmetauschers befinden, derart, daß die innere heiße Struktur (52) und die äußere kalte Struktur (54) voneinander unabhängig sind, daß die innere, heiße Struktur das in dem heißen Kollektor enthaltene Flüssigmetall zu dem Eintrittsfenster des Wärmetauschers lenkt und eine Wärmesperre bildet, während die äußere kalte Struktur die Abdichtung zwischen dem heißen Kollektor und dem kalten Kollektor sicherstellt.

2. Kernreaktor nach Anspruch 1, dadurch gekennzeichnet, daß die äußere kalte Struktur (54) ferner eine äußere Leitung (62) aufweist, deren zwei Enden mit dem äußeren Ring (50) des inneren Behälters bzw. dem ersten Ring (60) verbunden sind, und daß die innere warme Struktur (52) ferner eine innere Leitung (58) aufweist, die im Inneren der äußeren Leitung angeordnet ist und deren zwei Enden mit dem inneren Ring (48) des inneren Behälters bzw. dem zweiten Ring (56) verbunden sind.

3. Kernreaktor nach Anspruch 1 oder 2, dadurch gekennzeichnet, daß die dichte Verbindung (66) ein Argon-Glockensystem umfaßt, welches einen unteren Teil (64) und einen oberen Teil (68) aufweist, die von dem ersten Ring (60) bzw. dem Wärmetauscher (30) getragen sind.

4. Kernreaktor nach einem der Ansprüche 1 bis 3, dadurch gekennzeichnet, daß er ferner ein Ventil (74) aufweist, mit dem das Eintrittsfenster (30a) des Wärmetauschers versperrbar ist, daß das Ventil Dichtungen (76) aufweist, die, wenn das Ventil geschlossen ist, abdichtend mit dem Teil des zweiten Ringes (56) in Eingriff stehen, der sich unterhalb des Fensters befindet.

FIG. 1

FIG. 2

FIG. 3